# EUROPEAN PATENT APPLICATION

(11) **EP 3 163 027 A1**
(43) Date of publication of application: **03.05.2017**
(21) Application number: 16195825.1
(22) Date of filing: 26.10.2016
(51) Int. Cl.: F01D 5/28, F01D 9/02, F01D 25/14

(54) **COMPONENT FOR A GAS TURBINE ENGINE**

(30) Priority: 29.10.2015 US 201514926294
(71) Applicant: General Electric Company, Schenectady, NY 12345 (US)
(72) Inventor: BUNKER, Ronald Scott, Cincinnati, OH Ohio 45215 (US); GALLIER, Kirk D., Cincinnati, OH Ohio 45215 (US); FREY, David Alan, Cincinnati, OH Ohio 45215 (US)
(74) Representative: Pöpper, Evamaria

(57) **Abstract**

A component (100) for a gas turbine engine includes a first surface (102) and a second surface (104). The component (100) additionally includes one or more layers of ceramic matrix composite material (106, 108) extending between the first and second surfaces (102, 104). A thermal void (110) extends between a first end (112) and a second end (114). The second end (114) of the thermal void (110) is a terminal end embedded in the component (100) between the first and second surfaces (102, 104).

## Description

### FIELD OF THE INVENTION

The present subject matter relates generally to a component for a gas turbine engine formed of a CMC material.

### BACKGROUND OF THE INVENTION

A gas turbine engine generally includes, in serial flow order, a compressor section, a combustion section, a turbine section and an exhaust section. In operation, air enters an inlet of the compressor section where one or more axial compressors progressively compress the air until it reaches the combustion section. Fuel is mixed with the compressed air and burned within the combustion section to provide combustion gases. The combustion gases are routed from the combustion section through a hot gas path defined within the turbine section and then exhausted from the turbine section via the exhaust section.

It is generally desirable to increase temperatures in the combustion section and turbine section to provide for more efficient operation of the gas turbine engine. However, it may be difficult for certain components within, e.g., the combustion section and turbine section, to withstand such elevated temperatures. Accordingly, ceramic matrix composite ("CMC") materials are of particular interest for use in gas turbine engines, as such components are generally better able to withstand the higher operating temperature sought after. CMC materials typically include a ceramic fiber reinforcement material embedded in a ceramic matrix material.

However, components formed of CMC materials may have a decreased capability to withstand local stresses, including, e.g., local thermal stresses, and may also have a decreased thermal conductivity. Accordingly, it can be important to manage a temperature of the CMC component to ensure it remains below a temperature threshold for useful life and function. Thus, a component formed of a CMC material capable of better managing the thermal properties of such component would be useful. More specifically, a component formed of a CMC material having one or more attributes in the component that allow for management of the local thermal gradients would be particularly useful.

### BRIEF DESCRIPTION OF THE INVENTION

Aspects and advantages of the invention will be set forth in part in the following description, or may be obvious from the description, or may be learned through practice of the invention.

In one exemplary embodiment of the present disclosure, a component for a gas turbine engine is provided. The component defines a first surface and a second surface. The component includes one or more layers of a ceramic matrix composite material extending between the first and second surfaces. The component additionally defines a thermal void extending between a first end and a second end, the second end of the thermal void being a terminal end embedded in the component between the first surface and the second surface.

In another exemplary embodiment of the present disclosure, an aeronautical gas turbine engine is provided. The gas turbine engine includes a compressor section, a combustion section located downstream of the compressor section, and a turbine section located downstream of the combustion section. The gas turbine engine also includes a component defining a first surface and a second surface. The component includes one or more layers of a ceramic matrix composite material extending between the first and second surfaces. The component additionally defines a thermal void extending between a first end and a second end, the second end of the thermal void being a terminal end embedded in the component between the first surface and the second surface.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of a gas turbine engine in accordance with one embodiment of the present disclosure.
FIG. 2 is side, cross-sectional view of a component in accordance with an exemplary embodiment of the present disclosure.
FIG. 3 is a side, cross-sectional view of a component in accordance with another exemplary embodiment of the present disclosure.
FIG. 4 is a side, cross-sectional view of a component in accordance with yet another exemplary embodiment of the present disclosure.
FIG. 5 is a side, cross-sectional view of a component in accordance with still another exemplary embodiment of the present disclosure.
FIG. 6 is a top view of a first surface of a component in accordance with an exemplary embodiment of the present disclosure.
FIG. 7 is a side, cross-sectional view of the exemplary component of FIG. 6.
FIG. 8 is a side, cross-sectional view of a component in accordance with another exemplary embodiment of the present disclosure.
FIG. 9 is a side, cross-sectional view of the component in accordance with still another exemplary embodiment of the present disclosure.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative flow direction with respect to fluid flow in a fluid pathway. For example, "upstream" refers to the flow direction from which the fluid flows, and "downstream" refers to the flow direction to which the fluid flows.

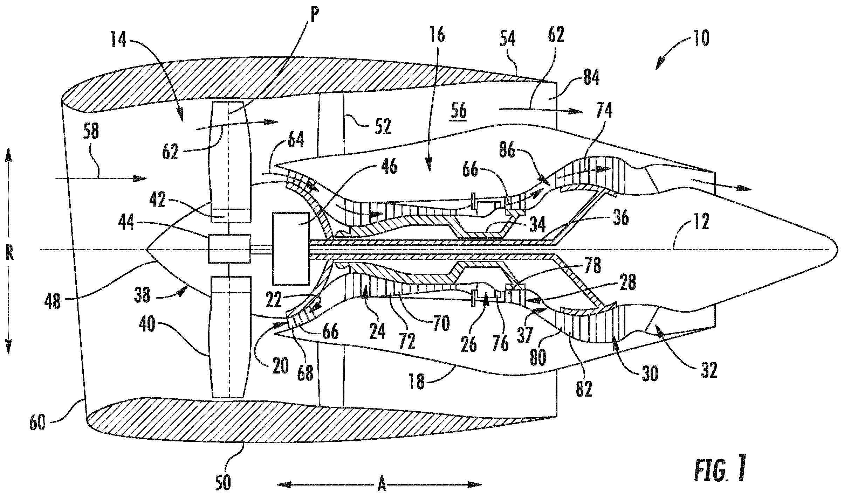

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R. The turbofan engine 10 may also define a circumferential direction (not shown) extending circumferentially about the axial direction A. In general, the turbofan 10 includes a fan section 14 and a core turbine engine 16 disposed downstream from the fan section 14.

The exemplary core turbine engine 16 depicted is generally enclosed within a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The compressor section, combustion section 26, turbine section, and nozzle section 32 together define a core air flowpath 37 therethrough. Moreover, the HP turbine 28 and LP 30 turbine may additionally include shroud assemblies (not labeled) which further define a hot gas path 86 (discussed below) of the core air flowpath 37.

For the embodiment depicted, the fan section 14 includes a variable pitch fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36 across a power gear box 46. The power gear box 46 includes a plurality of gears for stepping down the rotational speed of the LP shaft 36 to a more efficient rotational fan speed.

Referring still to the exemplary embodiment of FIG. 1, the disk 42 is covered by rotatable front hub 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that the nacelle 50 may be configured to be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the core air flowpath 37, or more specifically into the LP compressor 22. The ratio between the first portion of air 62 and the second portion of air 64 is commonly known as a bypass ratio. The LP compressor 22 includes a plurality of sequential stages of rotatable LP compressor rotor blades 66 and stationary LP compressor stator vanes 68 configured to compress the second portion of air 64. The pressure of the second portion of air 64 is then further increased as it is routed through the HP compressor 24, the HP compressor 24 also including a plurality of sequential stages of rotatable HP compressor rotor blades 70 and stationary HP compressor stator vanes 72. The compressed second portion of air 64 then flows into the combustion section 26, where it is mixed with fuel and burned in a combustion chamber defined by one or more combustion liners to provide combustion gases 74.

The combustion gases 74 are routed through the HP turbine 28 where a portion of thermal and/or kinetic energy from the combustion gases 74 is extracted via sequential stages of HP turbine stator vanes 76 that are coupled to the outer casing 18 and HP turbine rotor blades 78 that are coupled to the HP shaft or spool 34, thus causing the HP shaft or spool 34 to rotate, thereby supporting operation of the HP compressor 24. The combustion gases 74 are then routed through the LP turbine 30 where a second portion of thermal and kinetic energy is extracted from the combustion gases 74 via sequential stages of LP turbine stator vanes 80 that are coupled to the outer casing 18 and LP turbine rotor blades 82 that are coupled to the LP shaft or spool 36, thus causing the LP shaft or spool 36 to rotate, thereby supporting operation of the LP compressor 22 and/or rotation of the fan 38.

The combustion gases 74 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 84 of the turbofan 10, also providing propulsive thrust. The HP turbine 28, the LP turbine 30, and the jet exhaust nozzle section 32 at least partially define a hot gas path 86 for routing the combustion gases 74 through the core turbine engine 16.

It should be appreciated, however, that the exemplary turbofan engine 10 depicted in FIG. 1 is by way of example only, and that in other exemplary embodiments, the turbofan engine 10 may have any other suitable configuration, including, for example, any other suitable number of shafts or spools. Additionally, in other exemplary embodiments, the turbofan engine 10 may be an un-ducted turbofan engine, i.e., a turbofan engine not including the outer nacelle 50, and/or may not be a geared turbofan engine, such that the turbofan engine may not include a power gear box. Additionally, or alternatively, aspects of the present disclosure may be incorporated into any other suitable gas turbine engine. For example, in other exemplary embodiments, aspects of the present disclosure may be incorporated into a turboshaft engine, a turbocore engine, a turboprop engine, etc.

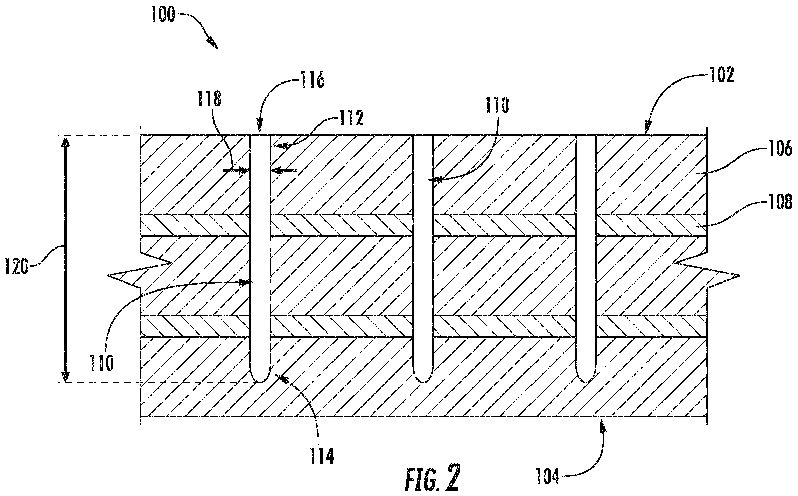

Referring now to FIG. 2, a side, cross-sectional view of a component 100 for a gas turbine engine in accordance with an exemplary embodiment of the present disclosure is provided. In certain exemplary embodiments, the component 100 of FIG. 2 may be incorporated into, e.g., the exemplary turbofan engine 10 described above with reference to FIG. 1.

The component 100 is formed of a ceramic matrix composite ("CMC") material. In one embodiment, the CMC material used may be configured as a continuous fiber reinforced CMC material. For example, suitable continuous fiber reinforced CMC materials may include, but are not limited to, CMC materials reinforced with continuous carbon fibers, oxide fibers, silicon carbide monofilament fibers and other CMC materials including continuous fiber lay-ups and/or woven fiber preforms. In other embodiments, the CMC material used may be configured as a discontinuous reinforced CMC material. For instance, suitable discontinuous reinforced CMC materials may include, but are not limited to, particulate, platelet, whisker, discontinuous fiber, in situ and nano-composite reinforced CMC materials. In other embodiments, the substrate may be formed from any other suitable non-metallic composite material. For instance, in an alternative embodiment, the substrate may be formed from an oxide-oxide high temperature composite material.

Further, the component 100 generally defines a first surface 102 and a second and opposite surface 104, the portion of the component 100 depicted being formed of one or more layers of CMC material extending between the first and second surfaces 102, 104. More particularly, for the embodiment depicted, the component 100 includes a plurality of layers or plies 106 of CMC materials stacked between the first and second surfaces 102, 104. Each of the plies 106 of CMC material may be configured as preformed CMC tape material, or any other form of CMC material. Notably, although the exemplary component 100 depicted includes three plies 106/ layers of CMC material, in other exemplary embodiments, the component 100 may be formed of any suitable number of plies 106 or layers. For example, the component 100 may be formed of ten or more plies 106, twenty or more plies 106, thirty or more plies 106, or any other suitable number of plies 106/layers of CMC material. Alternatively, however, the component 100 maybe formed of a single, continuous layer of CMC material between the first and second surfaces 102, 104.

Further, for the embodiment depicted, the component 100 includes one or more layers of interface material 108 positioned between adjacent plies 106 of CMC materials. The interface material 108 may be any suitable material for, e.g., joining two or more plies 106 or layers of CMC material together. For example, the interface material 108 may include silicon carbide, silicon, silica or alumina matrix materials and combinations thereof. Ceramic fibers may be embedded within the matrix, such as oxidation stable reinforcing fibers including monofilaments like sapphire and silicon carbide (e.g., Textron's SCS-6), as well as rovings and yarn including silicon carbide (e.g., Nippon Carbon's NICALON®, Ube Industries' TYRANNO®, and Dow Corning's SYLRAMIC®), alumina silicates (e.g., Nextel's 440 and 480), and chopped whiskers and fibers (e.g., Nextel's 440 and SAFFIL®), and optionally ceramic particles (e.g., oxides of Si, Al, Zr, Y and combinations thereof) and inorganic fillers (e.g., pyrophyllite, wollastonite, mica, talc, kyanite and montmorillonite).

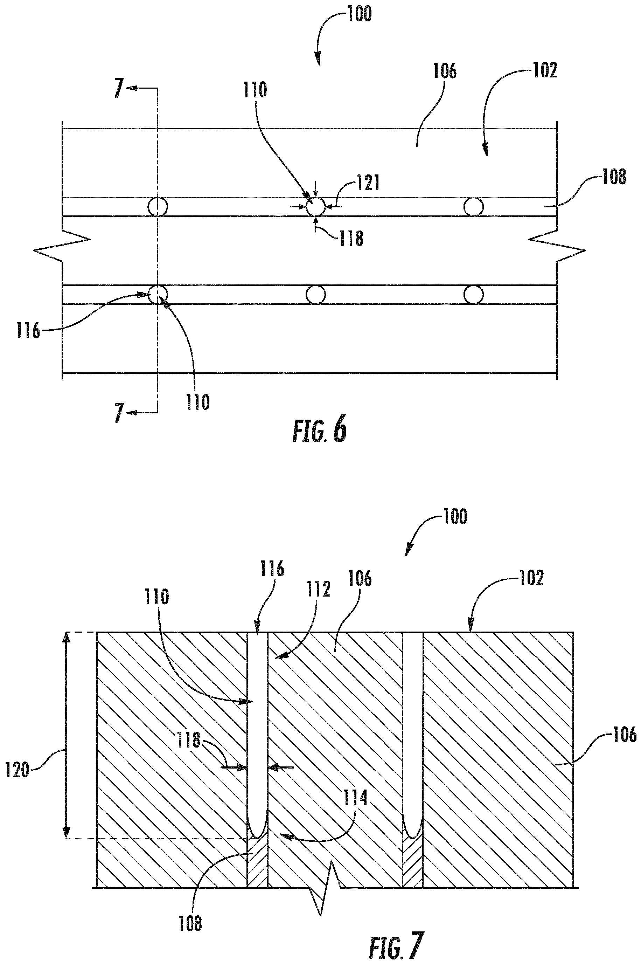

Furthermore, as is depicted in FIG. 2, the component 100 includes a thermal management void region, or "thermal void," 110 extending between a first end 112 and a second end 114. The exemplary thermal void 110 depicted defines an opening 116 on the first surface 102 of the component 100 at the first end 112 of the thermal void 110. By contrast, the second end 114 of the thermal void 110 is a terminal end, embedded in the component 100 between the first surface 102 and the second surface 104. The thermal void 110 depicted defines a width 118, which as used herein refers to an average width of the thermal void 110, and a length 120, which as used herein refers to a distance along the thermal void 110 between the first end 112 and the second end 114. The thermal void 110 additionally defines a height 121 (see embodiment of FIG. 6) in a direction perpendicular to a widthwise direction of the thermal void and a lengthwise direction of the thermal void.

As shown, the exemplary thermal void 110 depicted defines a substantially constant width 118 along the entire length 120 of the thermal void 110, such that the thermal void 110 defines a substantially uniform cross-sectional shape along its length 120. However, in other exemplary embodiments, the thermal void 110 may define any suitable cross-sectional shape along its length 120. For example, in other exemplary embodiments, the thermal void 110 may define a nonuniform shape along its length 120, such that the thermal void 110 does not define a substantially constant width 118 along its length 120.

The thermal void 110 additionally defines an aspect ratio. As used herein, "aspect ratio" refers to a ratio of the width 118 of the thermal void 110 to the length 120 of the thermal void 110. For the embodiment depicted, the thermal void 110 may be a relatively low aspect ratio thermal void 110. For example, the thermal void 110 may define an aspect ratio of less than about 1:3. More particularly, in certain exemplary embodiments, the thermal void 110 may define an aspect ratio of less than about 1:4, less than about 1:6, less than about 1:10, less than about 1:20, or even smaller. It should be appreciated, that as used herein, terms of approximation, such as "about" or "approximately," refer to being within a ten percent margin of error.

For the embodiment depicted, the thermal void 110 extends through at least one of the one or more plies 106 of CMC material and additionally extends through at least one of the one or more layers of interface material 108. Moreover, as shown, the component 100 further includes a plurality of thermal voids 110, each of which for the embodiment depicted extends parallel to the others and defines substantially the same size/ aspect ratio.

In certain exemplary embodiments, such as the embodiment depicted, the thermal voids 110 may be filled with air and may account for a more than nominal volume of the component 100. For example, for a given local region of the component 100 including the plurality of thermal voids 110, the local region may include at least five percent (5%) by total volume of thermal voids 110. In other exemplary embodiments, however, the local region may include at least seven percent (7%) by volume, at least ten percent (10%) by volume, or at least fifteen percent (15%) by volume of thermal voids 110. Additionally, air without active through-flow defines a higher effective thermal resistance relative to the plies 106 of CMC material and layers of interface material 108. Accordingly, inclusion of a plurality of thermal voids 110 may provide a noticeable increase in an effective thermal resistance for a local region of the component 100 defining the plurality of thermal voids 110. Example 1, below, provides some explanation about how an exemplary thermal void 110 may affect the effective thermal resistance of a local region of the component 100.

It should be appreciated that the percentage by total volume of thermal voids 110 of a given local region of the component 100 refers to a ratio of a volume of thermal voids 110 to a total volume of the thermal voids 110, plies 106 of CMC material, and layers of interface material 108. Additionally, the "local region" may refer to any suitable volume of the component 100 including the plurality of thermal voids 110. For example, the local region may refer to a region represented by approximately 0.005 cubic inches of the first surface 102 and corresponding wall volume, 0.01 cubic inches of the first surface 102 and corresponding wall volume, 0.025 cubic inches of the first surface 102 and corresponding wall volume, 0.05 cubic inches of the first surface 102 and corresponding wall volume, 0.1 cubic inches of the first surface 102 and corresponding wall volume, or any other suitable volume. However, the number, spacing, and orientation of the thermal voids, along with a size and shape of the local region of the component 100 may change to suit the design requirements and objectives.

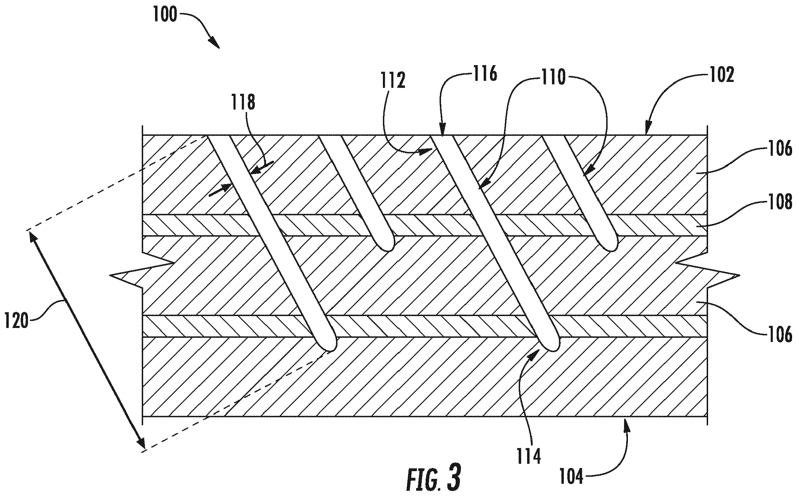

It should be appreciated, however, that in other exemplary embodiments, the component 100 may include any suitable number of thermal voids 110, any suitable orientation of thermal voids 110, and/or any suitable size of thermal voids 110. For example, referring now to FIGS. 3 through 5, side, cross-sectional views of components 100 in accordance with various other embodiments of the present disclosure provided. Except as described below, the components 100 of FIGS. 3 through 5 may each be configured in substantially the same manner as the exemplary component 100 of FIG. 2. Accordingly, the same or similar numbering may refer to the same or similar parts.

Referring particularly to the exemplary component 100 of FIG. 3, the exemplary component 100 includes a plurality of thermal voids 110, each of which extending in a non-perpendicular direction relative to the first surface 102. More particularly, each of the thermal voids 110 depicted in FIG. 3 define an acute angle with the first surface 102. Moreover, as is depicted, certain of the thermal voids 110 depicted in FIG. 3 are of different lengths 120 than other thermal voids 110 depicted in FIG. 3.

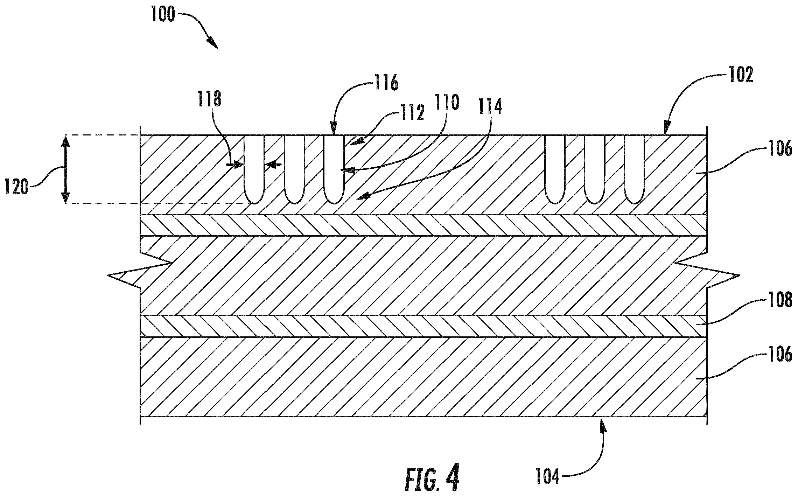

Additionally, referring now particularly to the exemplary component 100 of FIG. 4, the exemplary component 100 includes a plurality of thermal voids 110, each of the thermal voids 110 extending only into a first ply 106 or layer of the CMC material forming the component 100. Moreover, the exemplary thermal voids 110 depicted in FIG. 4 define a non-uniform spacing. More particularly, a first group of thermal voids 110 depicted in FIG. 4 are spaced from a second group of thermal voids 110 depicted in FIG. 4.

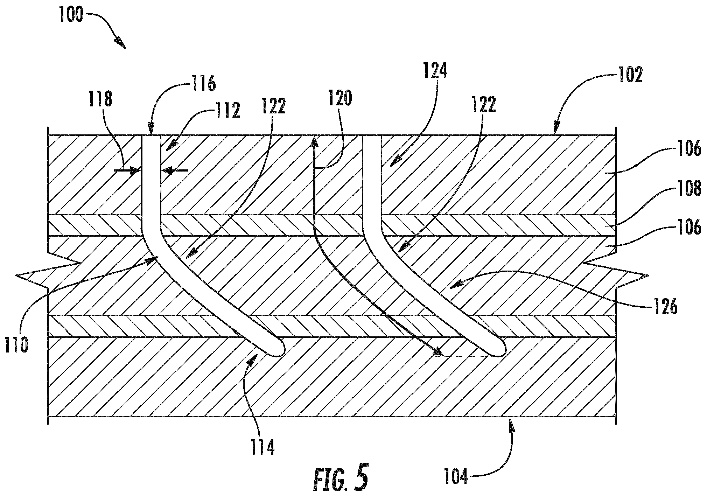

Furthermore, referring now particularly to the exemplary component 100 of FIG. 5, the exemplary component 100 includes a plurality of thermal voids 110, the thermal voids 110 extending in a non-linear direction. Specifically, the exemplary thermal voids 110 each define a bend 122 such that a first portion 124 of the thermal voids 110 extends in a perpendicular direction relative to the first surface 102 of the component 100 and a second portion 126 of the thermal voids 110 defines an acute angle relative to the first surface 102 of the component 100. The bend 122 may define any suitable radius of curvature, including a zero radius of curvature. For exemplary embodiments in which the bend 122 defines a zero radius of curvature, the thermal void 110 may be configured as a piecewise linear voided region. Further, although for the embodiment depicted, a single bend 122 is shown, in other embodiments, a plurality of bends may be included in one or more of the thermal voids. Moreover, in certain embodiments, the bend may take the thermal void 110 out of the plane depicted in the FIG. 5. Such a configuration may allow the thermal voids 110 to better track non-uniform thermal gradients which may be expected to form in the component 100 during use.

Moreover, it should be appreciated that although the exemplary embodiments discussed above include thermal voids 110 extending perpendicular to a direction in which the various plies 106/ layers of CMC material extend (i.e., perpendicular to the first surface 102), in still other exemplary embodiments, the exemplary thermal voids 110 may extend in any other direction. For example, referring now to FIGS. 6 and 7, a component 100 in accordance with another exemplary embodiment of the present disclosure is provided. For the embodiment of FIGS. 6 and 7, the exemplary component 100 includes one or more thermal voids 110 extending in a direction parallel to the direction in which the various plies 106/layers of CMC material extend. Specifically, FIG. 6 provides an end view of the component 100 showing the various thermal voids 110 extending therein, and FIG. 7 provides a cross-sectional view of the component 100 showing various thermal voids 110 extending therein. Except as described herein, the component 100 of FIGS. 6 and 7 may be configured in substantially the same manner as exemplary component 100 described above with reference to FIG. 2. Accordingly, the same or similar numbering may refer to the same or similar parts.

As is depicted in FIGS. 6 and 7 and previously stated, the thermal voids 110 for the exemplary embodiment depicted extend generally parallel to a direction in which the CMC plies 106/layers extend between a first end 112 and a second end 114. The thermal voids 110 also define an opening 116 in the first surface 102 at the first end 112. Notably, for the embodiment depicted, the first surface 102 of the component 100 may, for example, be one end of a wall of the component 100. Further, for the embodiment depicted, the thermal voids 110 extend solely into the layer of interface material 108 positioned between adjacent plies 106 of CMC material. However, in other embodiments, one or more of the thermal voids 110 may extend into both a layer of interface material 108 and a ply 106 of CMC material. Alternatively, in still other embodiments, one or more of the thermal voids 110 may extend solely into a ply 106 of CMC material.

As briefly discussed above, each of the thermal voids 110 additionally defines a height 121. The height 121 may be substantially the same as the width 118, or alternatively, the height 121 may be different than the width 118. In at least certain exemplary embodiments, the height 121 may be equal to a thickness of a layer of interface material 108. Alternatively, the height 121 may be equal to a thickness of a ply 106 of CMC material. Alternatively, still, however, the height 121 may be greater than or less than a thickness of a ply 106 of CMC material, and greater than or less than a thickness of a layer of interface material 108.

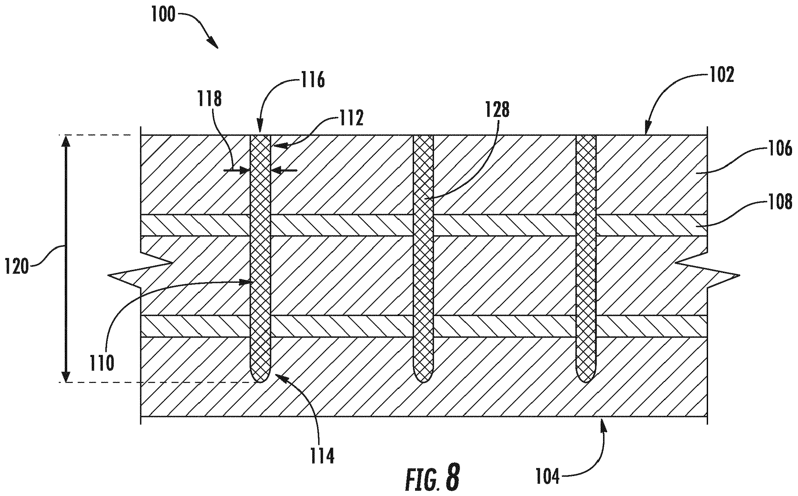

Referring now to FIG. 8, yet another exemplary embodiment of a component 100 for a gas turbine engine is provided. Except as described herein, the exemplary component 100 of FIG. 8 may be configured in substantially the same manner as exemplary component 100 described above with reference to FIG. 2. Specifically, the exemplary component 100 defines a first surface 102 and a second surface 104, and further includes one or more plies 106/layers of CMC material stacked between the first and second surfaces 102, 104. Additionally, the component 100 includes a plurality of thermal voids 110 extending from a first end 112 defining an opening 116 on the first surface 102 and a second end 114, the second end 114 being a terminal end embedded in the component 100. However, for the embodiment depicted, the component 100 further includes a fugitive material 128 positioned at least partially within the thermal void 110. For example, the fugitive material 128 may be a rod, a bar, a flexible or inflexible wire, or other solid material having a desired geometric shape for the thermal void 110. Alternatively, the fugitive material 128 may be formed of a flexible material filled with, e.g., powders of high temperature material. The fugitive material 128 may be positioned in a desired location for the thermal void 110 during formation of the component 100 such that the various plies 106 of CMC material and interface material 108 are positioned around the fugitive material 128 during formation of the component 100. Notably, the exemplary thermal voids 110 in the components 100 described above, e.g., with reference to FIGS. 2 through 7 may be formed in the same way, except that the fugitive material 128 may be removed prior to the component 100 being finalized. However, for the embodiment of FIG. 8, the fugitive material 128 may remain in place as formation of the component 100 is completed/ during utilization of the component 100.

In certain exemplary embodiments, the fugitive material 128 may be any suitable refractory material/high temperature material capable of withstanding an anticipated range of temperature exposures for the component 100. It should be appreciated, that as used herein, "refractory material" refers to any material that is capable of maintaining its strength at relatively high temperatures, or more particularly, any material that is capable of withstanding the elevated temperatures to which certain components within the gas turbine engine, i.e., greater than about 1,000 degrees Fahrenheit. For example, in certain embodiments, the fugitive material 128 may be any suitable refractory metal material or refractory ceramic material. By way of example only, the fugitive material 128 may include a graphite material, a tungsten material, a quartz material, etc. However, in other embodiments, any other suitable materials capable of withstanding an anticipated range of temperature exposures for the component 100 may be utilized as a fugitive material 128.

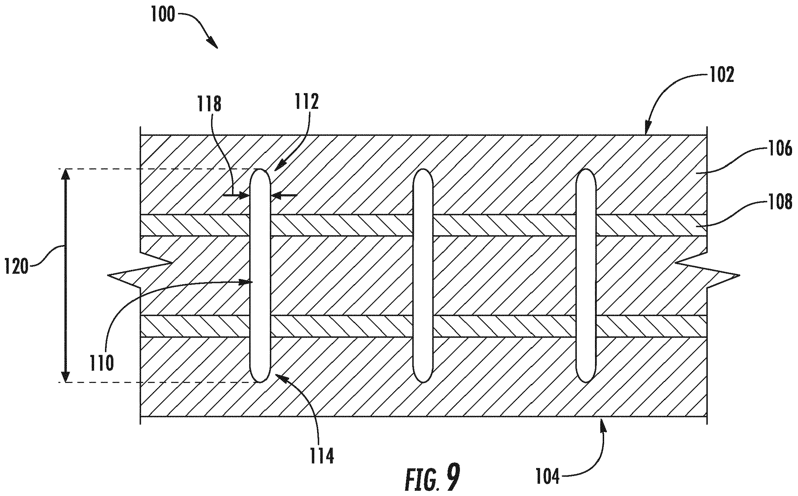

Referring now to FIG. 9, still another exemplary embodiment of a component 100 for a gas turbine engine is provided. Except as described herein, the exemplary component 100 of FIG. 9 may also be configured in substantially the same manner as the exemplary components 100 described above with reference to FIG. 2. Specifically, the exemplary component 100 of FIG. 9 defines a first surface 102 and a second surface 104, and further includes one or more plies 106 or layers of CMC material stacked between the first and second surfaces 102, 104. Additionally, the component 100 includes a plurality of thermal voids 110 extending from a first end 112 to a second end 114, the second end 114 being a terminal end embedded in the component 100. However, for the embodiment depicted, the first end 112 of the thermal void 110 is also configured as a terminal end embedded within the component 100. For example, in certain exemplary embodiments, a fugitive material (such as the fugitive material 128 described above with reference to FIG. 8) may be positioned within the layers of CMC plies 106 during formation of the component 100 and covered by the CMC plies 106. Notably, for the embodiment depicted, the fugitive material may be removed during formation of the CMC component 100. For example, the fugitive material may be burned-out or melted during finalization of the component 100, leaving an empty and enclosed thermal void 110 behind. Notably, however, in other embodiments, the fugitive material may remain within the enclosed thermal void 110 of the component 100 (not shown). For example, in such an exemplary embodiment, the fugitive material may be a high temperature fugitive material capable of withstanding the anticipated temperatures to which the component 100 will be exposed.

It should further be appreciated, that in other exemplary embodiments, the thermal voids 110 may have any other suitable configuration. For example, in other exemplary embodiments, the component may include a thermal void 110 intersecting with another thermal void 100. For example, in one exemplary embodiment a first thermal void may extend perpendicular to a direction in which the first surface 102 extends, and a second thermal void may intersect the first thermal void and extend parallel to the direction in which the first surface 102 extends. Notably, with such a configuration, the first and second thermal voids may define a single opening at, e.g., a first end of the first thermal void, or alternatively may not define any openings. Of course, in still other exemplary embodiments, the intersecting thermal voids may extend in any other suitable direction.

Moreover, although not depicted, the component may additionally include one or more other materials not depicted. For example, in certain exemplary embodiments, the component may include one or more layers or coatings applied to, e.g., the first surface 102 and/or the second surface 104. For example, wherein the first surface 102 is configured as a hot gas path surface, the first surface may include an environmental barrier coating, a thermal barrier coating, or any other suitable coating to protect the component 100 during operation of the gas turbine engine. With such an exemplary embodiment, the one or more thermal voids 110 may define the opening 116 at, e.g., the first end 112 through the additional layers or coatings provided to the component 100.

A component formed in accordance with one or more of the embodiments described herein may allow for a desired temperature profile for such component. More particularly, inclusion of one or more thermal voids in the component extending between a first end and a second end, the second end being a terminal end embedded within the component, may allow for certain volumes of differing thermal conductivity such that a desired thermal profile for the component may be created. For example, inclusion of one or more thermal voids in accordance with one or more embodiments of the present disclosure may allow for the component to remain within a safe operating temperature range during operation. More particularly, inclusion of the thermal voids in accordance with the present disclosure may create multiple layers of materials having different thermal properties to create a desired thermal profile. Additionally, the thermal voids of the present disclosure do not require an active flow of cooling fluid (e.g., cooling air) therethrough..

As used herein, the term "active flow of cooling fluid" refers to providing, e.g., a pressurized flow of air or other cooling medium to an inlet of a channel, such that the air or other cooling medium is flowed through such channel to an outlet. While the present application does not require an active flow of cooling fluid, the thermal voids may experience a natural circulation of, e.g., air, therein due to the exposure to different temperatures surrounding the thermal voids.

It should be appreciated, that the present disclosure contemplates the component 100 being any component of a gas turbine engine capable of being formed of a CMC material. For example, referring back to FIG. 1, in certain exemplary embodiments, the component 100 may be a compressor rotor blade 66, 70 in the plurality of compressor rotor blades, a compressor stator vane 68, 72 in the plurality of compressor stator vanes, a turbine rotor blade 78, 82 in the plurality of turbine rotor blades, or a turbine stator vane 76, 80 in the plurality of turbine stator vanes. Additionally, or alternatively, in other embodiments, the component 100 may be configured as a component 100 within a combustion section 26 of the gas turbine engine. For example, in certain exemplary embodiments, the component 100 maybe configured as at least one of a combustion liner defining a combustion chamber, a deflector configured to protect a combustor dome assembly, or a heat shield configured to protect the combustor dome assembly. Further, in still other exemplary embodiments, the component 100 may be configured as, e.g., a shroud surrounding at least a portion of the HP turbine 28 and/or LP turbine 30.

Accordingly, in one or more the above embodiments, the second surface 104 of the component 100 (in which the opening 116 at the first end 112 of the thermal void 110 is not defined) may be a hot gas surface of the component 100. More particularly, the second surface 104 of the component 100 may be a surface of the component 100 exposed to the relatively high temperatures within the core air flowpath of the turbofan engine 10, such as the hot gas path 86. For example, wherein the component 100 is configured as a combustion liner defining a combustion chamber, the second surface 104 may be a surface facing the combustion chamber, or when the component 100 is configured as an HP or LP turbine shroud, the second surface 104 may be a surface facing the hot gas path 86. Alternatively, however, in still other embodiments, the first surface 102 of the component 100 may be a hot gas surface of the component 100.

Further, it should be appreciated, that the exemplary portions of the component 100 depicted in FIGS. 2 through 9 may be a portion of, e.g., a wall of the component 100, or may represent an entire thickness of the component 100.

For clarity purposes, the following example, Example 1, is provided to show how the thermal voids 110 may affect a local region of the component 100.

Example 1: For the following example, it is assumed a wall of a component is formed of ten (10) plies of CMC material and matrix interface material, each ply and adjacent matrix interface material having a thickness of 0.010 inches and having a thermal conductivity of 7 Btu/hr/ft/degrees F. Assuming heat flux through the wall of the component is in a normal direction relative to the thickness, heat flux, on a per unit area basis is Q/A = k (dT/x), where "A" is surface area normal to the flux, "k" is thermal conductivity, "dT" is temperature difference, and "x" is wall thickness. This may also be expressed as Q/A = dT / R, where "R" is thermal resistance. With the above assumptions, thermal resistance, R, is 0.0012 hr-ft²-degrees F/ Btu.

Now assume a thermal void in accordance with an embodiment of the present disclosure is provided in the wall of the component having a thickness of 0.010 inches and extending parallel to a surface of the wall. Additionally assume the thermal void is filled with air having a thermal conductivity of 0.07 Btu/hr/ft/degrees F. The thermal resistance of the thermal void would then be 0.0119 hr-ft²-degrees F/ Btu.

One having skill in the art will appreciate that the effective thermal resistance of the wall including the thermal void would then be 0.0131 hr-ft²-degrees F/ Btu. Accordingly, a ratio of the the effective thermal resistance of a wall including the thermal void to that of the original wall would thus be 10.9 (i.e., 0.0131/ 0.0012). Thus, for the same temperature difference temperature potential, the heat flux of the wall including the thermal void will be 10.9 times less than the same wall not having the thermal void. This example assumes for simplicity that the thermal void is continuous as a layer in the composite wall and treats the wall as a one-dimensional element. For the discrete thermal void regions depicted in the embodiments, the magnitude of effective thermal resistance increase will be less due to the two- and three-dimensional aspects of the geometry. Considering only the immediate material surrounding the thermal void, i.e. a volume roughly similar to that of the thermal void, the reduction in heat flux may be very high, such as that of Example 1. However, considering the local bulk composite region with thermal voids present, the reduction in heat flux may be an order of magnitude lower, e.g. 1.1, but still substantial with respect to resulting thermal stresses. The complexity associated with the use of multiple thermal void regions, as well as the range of possible design outcomes, will be appreciated to be very broad. In addition, the orientation of the thermal voids may serve to reduce heat flux in directions other than only through the wall thickness. For example, the embodiment of Figure 2 will reduce in-plane heat flux between sections of the wall much more than the heat flux through the wall.

Accordingly, it should be appreciated that in other embodiments, the thermal void may be configured in any other suitable manner (e.g., orientation, size, depth, etc.). Additionally, the wall of the component may be any other suitable size. Accordingly, although for Example 1 the thermal void created a 10.9 times reduction in heat flux through the wall of the component (i.e., the local region of the component), in other exemplary embodiments, the thermal void(s) may create a higher or lower reduction in heat flux through the wall of the component. For example, in other exemplary embodiments, the thermal void may create at least about a 1.2 times reduction in heat flux of the wall of the component, at least about a 1.5 times reduction in heat flux of the wall of the component, at least about a three times reduction in heat flux of the wall of the component, at least about a five times reduction in heat flux through the wall the component, at least about an eight times reduction in heat flux of the wall component, at least about a ten times reduction in heat flux through the wall the component, or any other suitable reduction.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:
1. A component for a gas turbine engine defining a first surface and a second surface, the component comprising:
   one or more layers of a ceramic matrix composite material extending between the first and second surfaces, wherein the component defines a thermal void extending between a first end and a second end, the second end of the thermal void being a terminal end embedded in the component between the first surface and the second surface.
2. The component of clause 1, wherein the first end of the thermal void defines an opening on the first surface of the component.
3. The component of clause 2, wherein at least one of the first surface or the second surface is a hot gas surface.
4. The component of clause 1, wherein the thermal void defines an aspect ratio of less than about 1:4.
5. The component of clause 1, wherein the thermal void defines a width and a length, and wherein the width of the thermal void is substantially consistent along the entire length of the thermal void.
6. The component of clause 1, further comprising:
   a fugitive material positioned at least partially within the thermal void.
7. The component of clause 6, wherein the fugitive material is comprised of a refractory material.
8. The component of clause 1, wherein the thermal void extends through at least one of the one or more layers of the ceramic matrix composite material.
9. The component of clause 1, further comprising:
   one or more layers of interface material positioned between adjacent layers of ceramic matrix composite material, wherein the thermal void extends through at least one of the one or more layers of interface material.
10. The component of clause 1, wherein the component is at least one of a shroud, combustion liner, deflector, turbine center frame, compressor rotor blade, compressor stator vane, turbine rotor blade, or turbine stator vane.
11. The component of clause 1, wherein the first end of the thermal void is a terminal end embedded in the component between the first surface and the second surface.
12. The component of clause 1, wherein the component defines a local region, wherein the component defines one or more thermal voids within the local region, and wherein the thermal voids create at least about a 1.2 times reduction in heat flux through the local region of the component.
13. The component of clause 1, wherein the component defines a local region, wherein the component defines one or more thermal voids within the local region, and wherein the thermal voids create at least about a 1.5 times reduction in heat flux through the local region of the component.
14. A gas turbine engine, comprising:
   a compressor section;
   a combustion section located downstream of the compressor section;
   a turbine section located downstream of the combustion section; and
   a component defining a first surface and a second surface, the component comprising
   one or more layers of a ceramic matrix composite material extending between the first and second surfaces, the component defining a thermal void extending between a first end and a second end, the second end of the thermal void being a terminal end embedded in the component between the first surface and the second surface.
15. The gas turbine engine of clause 14, wherein the first end of the thermal void defines an opening on the first surface of the component or the second surface of the component.
16. The gas turbine engine of clause 15, wherein at least one of the first surface or the second surface is a hot gas surface.
17. The gas turbine engine of clause 14, wherein the thermal void defines an aspect ratio of less than about 1:4.
18. The gas turbine engine of clause 14, further comprising a fugitive material positioned at least partially within the thermal void.
19. The gas turbine engine of clause 14, further comprising one or more layers of interface material positioned between adjacent layers of ceramic matrix composite material, wherein the thermal void extends through at least one of the one or more layers of interface material.
20. The gas turbine engine of clause 14, wherein the compressor section includes a plurality of compressor rotor blades and a plurality of compressor stator vanes, wherein the turbine section includes a plurality of turbine rotor blades and a plurality of turbine stator vanes, and wherein the component is at least one of the plurality of compressor rotor blades, compressor stator vanes, turbine rotor blades, or turbine stator vanes.

## Claims

1. A component (100) for a gas turbine engine defining a first surface (102) and a second surface (104), the component (100) comprising:
one or more layers of a ceramic matrix composite material extending between the first and second surfaces (102, 104), wherein the component (100) defines a thermal void (110) extending between a first end (112) and a second end (114), the second end (114) of the thermal void (110) being a terminal end embedded in the component (100) between the first surface (102) and the second surface (104).

2. The component (100) of claim 1, wherein the first end (112) of the thermal void (110) defines an opening on the first surface (102) of the component (100).

3. The component (100) of claims 1 or 2, wherein at least one of the first surface (102) or the second surface (104) is a hot gas surface.

4. The component (100) of claim 1, wherein the thermal void (110) defines an aspect ratio of less than about 1:4.

5. The component (100) of claim 1, wherein the thermal void (110) defines a width and a length, and wherein the width of the thermal void (110) is substantially consistent along the entire length of the thermal void (110).

6. The component (100) of claim 1, further comprising:
a fugitive material positioned at least partially within the thermal void (110).

7. The component (100) of claim 1, wherein the component (100) is at least one of a shroud, combustion liner, deflector, turbine center frame, compressor rotor blade, compressor stator vane, turbine rotor blade, or turbine stator vane.

8. The component (100) of claim 1, wherein the first end (112) of the thermal void (110) is a terminal end embedded in the component (100) between the first surface (102) and the second surface (104).

9. The component (100) of claim 1, wherein the component (100) defines a local region, wherein the component (100) defines one or more thermal voids (110) within the local region, and wherein the thermal voids (110) create at least about a 1.5 times reduction in heat flux through the local region of the component (100).

10. The component (100) of claim 1, further comprising:
one or more layers of interface material (108) positioned between adjacent layers of ceramic matrix composite material, wherein the thermal void (110) extends through at least one of the one or more layers of interface material (108).

11. A gas turbine engine, comprising:
a compressor section;
a combustion section (26) located downstream of the compressor section;
a turbine section located downstream of the combustion section (26); and
a component (100) defining a first surface (102) and a second surface (104), the component (100) comprising
one or more layers of a ceramic matrix composite material extending between the first and second surfaces (102, 104), the component (100) defining a thermal void (110) extending between a first end (112) and a second end (114), the second end (114) of the thermal void (110) being a terminal end embedded in the component (100) between the first surface (102) and the second surface (104).

12. The gas turbine engine of claim 11, wherein the first end (112) of the thermal void (110) defines an opening on the first surface (102) of the component (100) or the second surface (104) of the component (100) and wherein the thermal void (110) defines an aspect ratio of less than about 1:4.

13. The gas turbine engine of claim 11, wherein at least one of the first surface (102) or the second surface (104) is a hot gas surface.

14. The gas turbine engine of claim 11, further comprising:
a fugitive material positioned at least partially within the thermal void (110).

15. The gas turbine engine of claim 11, further comprising:
one or more layers of interface material (108) positioned between adjacent layers of ceramic matrix composite material, wherein the thermal void (110) extends through at least one of the one or more layers of interface material (108).
